# EUROPEAN PATENT SPECIFICATION

(11) **EP 1 761 080 B1**
(45) Date of publication and mention of the grant of the patent: **26.11.2008**
(21) Application number: 06741840.0
(22) Date of filing: 12.05.2006
(51) Int. Cl.: H04L 12/56

(54) **DYNAMIC QoS REALIZING METHOD IN WIMAX SYSTEM**
DYNAMISCHES VERFAHREN ZUR REALISIERUNG DER DIENSTGÜTE IN WIMAX-SYSTEM
PROCEDE DYNAMIQUE DE REALISATION DE QUALITE DE SERVICE DANS LE SYSTEME WIMAX

(30) Priority: 15.05.2005 CN 200510034687
(43) Date of publication of application: 07.03.2007
(73) Proprietor: Huawei Technologies Co., Ltd., Longgang District Shenzhen Guangdong 518129 (CN)
(72) Inventor: XU, Zizhen, Shenzhen, Guangdong 518129 (CN); WU, Tao, Shenzhen, Guangdong 518129 (CN); ZHENG, Ruobin, Shenzhen, Guangdong 518129 (CN)
(74) Representative: Epping - Hermann - Fischer
(86) International application number: PCT/CN2006/000950
(87) International publication number: WO 2006/122483

(56) References cited:
- EP-A- 1 179 927
- WO-A-95/06995
- WO-A-95/29565
- WO-A-20/05039115
- CN-A- 1 471 329
- US-A1- 2002 087 699

## Description

### Field of the Invention

The present invention relates to wireless access technologies, and more particularly to a method for realizing dynamic QoS in WIMAX system and a WIMAX system.

### Background of the Invention

In the past, the Internet generally provides only one level of service, that is, the "best-effort" service where all data packets are treated equally. However, in fact the Internet can not guarantee a uniform quality of service. When a serious congestion occurs, in some areas of the network, the quality of service is degraded seriously. Moreover, the "best-effort" Internet service is not good enough for today's users, whether they are children using Web as an extended school library, companies maintaining just-in-time inventory database, or the customers seeking more convenient ways to shop. The "best-effort" service cannot properly support the emerging Internet-based voice and video applications. Consequently, Internet service providers (ISPs) want to offer and charge for services that meet different requirements. To meet the users' different requirements, it is put forwarded a Quality of Service (QoS) guarantee solution which allows a user service to have an expectable service level in packet loss rate, delay, jitter and bandwidth etc. The IP QOS guarantee is intended to achieve following purposes: avoiding and managing IP network congestion, decreasing IP packet lost rate, modulating IP network traffic, providing dedicated-bandwidth for particular users or services, and supporting real-time services over IP network.

Compared with other Broadband Wireless Access (BWA) technologies in the prior art, the World Interoperability for Microwave Access (WiMAX) technology based on IEEE 802.16 standard resolves the problems both in physical-layer environment (outdoor radio transmission) and in QoS, enables WiMAX products to be used indoors and outdoors, supports voice and video services with high demand in data access and real-time. WiMAX is a Wireless Metropolitan Area Network technology satisfying the "last kilometer" access, which is capable of providing both fixed wireless broadband access and middle-speed or low-speed portable access.

In a WIMAX system, data transmission is connection-oriented, that is, any uplink or downlink data are transported in a certain connection. A service flow bears a certain one-way data flow and has many related attributes and three statuses, wherein when being in Admitted or Active status, the service flow is also called a connection. 802.16x defines four service flow types, which are different from each other in bandwidth scheduling characteristic, bandwidth request mode and QoS parameter set. Any type of service data flow has a 32-bit service flow identifier (SFID), which is assigned by a base station (BS).The service types include: Unsolicited Grant Service (UGS), Real-time-polling Service (Rt-PS), Non real-time Polling Service (Nrt-PS) and Best Effort Service (BES).

UGS service: for this type of service, the bandwidth is reserved; the BS periodically notifies a Subscriber Station (SS) of the available time-slot bandwidth, without the SS sending a bandwidth request, for its bandwidth is guaranteed. The UGS service is applicable to services with higher priorities, and mainly used in real-time services with fixed data packet length, such as T1/E1, Voice over IP (VoIP) and ATM private line.

Rt-PS service: the BS assigns a regular bandwidth request slot to the SS for its sending a bandwidth request to the BS for bandwidth. The bandwidth is not reserved; however it is guaranteed and may be obtained by requesting on demand. The Pt-PS service is applicable to services with high real-time demand, and mainly used for supporting real-time video services.

Nrt-PS service: the BS assigns a non-regular bandwidth request slot to the SS for its sending a bandwidth request to the BS for bandwidth; when the request slots are assigned, the intervals between them will be very short so as to guarantee the service has a chance to be sent in the condition of network congestion. The Nrt-PS service is applicable to services without high real-time demand, such as FTP.

BE service: the service is delivered at best effort; the SS requests the BS for bandwidth by using a competitive request slot assigned by the BS, and sends the service only when getting the requested bandwidth, therefore the bandwidth is not guaranteed. The BE service is applicable to services with lower priorities, such as Web browsing, and receiving and sending E-mails.

For Rt-PS service, the bandwidth may be requested periodically; and no bandwidth requested, no bandwidth resource occupied; for Rt-PS, whether to request for bandwidth is determined by Service-Aware, i.e., according to the service requirement. Service-Aware means that a device may parse a message; for example, since the characteristic of a VOIP message is a specific User Datagram Protocol (UDP) port number, to make awareness of the VOIP service, it is needed to parse the UDP port number of the VOIP message.

As it is known, as voice service has high requirement on bandwidth and delay, and as the bandwidth and delay of UGS service or Rt-PS service are guaranteed, the type of the voice service may be defined as UGS service. UGS service is bandwidth-reserved, that is, SS and BS reserve the bandwidth for a UGS connection directly, and BS allocates air interface bandwidth to the SS directly with the bandwidth exclusive but not shared. If an Integrated Access Device (IAD) is capable of receiving 8 channels of voices and all the 8 channels of voices are UGS services, air interface bandwidth needs to be reserved for all those 8 channels of voice service flows no matter whether the voice channels are established, thus resulting in a low bandwidth utilization of air interface.

International patent application WO 2005/039115 discloses an arrangement and a method for providing a user station with access to a service providing network over a wireless radio access network, particularly Bluetooth.

European patent application EP 1179927 provides dynamic control for either or both of the service level (e.g., priority of transmission, class or type of service, bandwidth, etc) and allocation of the costs associated with the service levels provided to users.

### Summary of the Invention

Embodiments of the present invention provide a method for realizing WIMAX dynamic QoS based on Service-Aware terminal and a WIMAX system, in which there is no need to reserve bandwidth resource, and bandwidth may be requested dynamically on demand. According to an embodiment of the present invention, there is provided a method for realizing dynamic QoS in WIMAX system. The method includes:
a media gateway making awareness of a service which is requested by a calling user terminal, reporting to a media gateway controller connected to a broadband access server that the calling user terminal is off hook, requesting, by the media gateway controller, to send a dial tone to the calling user terminal, notifying, by the media gateway, a subscriber station to establish a corresponding connection with a base station; and
sending by the subscriber station a request of establishing the connection to the base station and requesting the base station for bandwidth, and establishing a service channel from the media gateway to the subscriber station as well as the base station. The making awareness of the service comprises that the media gateway parses a message from the calling user terminal to determine the type of a service flow carried in the message. According to an embodiment the method further includes:
   the calling user terminal sending the service request to the media gateway; and
   the media gateway responds the request of the calling user terminal, and reports the request of the calling user terminal to the Media Gateway Controller (MGC).

After receiving the notification from the media gateway, the subscriber station may send a Dynamic Service Addition (DSA) to the base station (BS) to request for the connection, and the BS allocates the resource by a Connection Admission Control (CAC) or rejects the request.

According to an embodiment, when the bandwidth is requested successfully, the media gateway controller notifies the media gateway to send a prompt signal to a called user terminal, and notifies the media gateway to send a prompt signal to the calling user terminal.

According to an embodiment after receiving the response from the called user, the media gateway controller notifies the calling user terminal and the called user terminal that they may begin the service communication with each other.

The method also includes according to an embodiment:
when the bandwidth is not requested successfully, the media gateway sends a busy signal to the calling user terminal, and the media gateway controller notifies a related media gateway (MG1) to release the resource.

According to an embodiment the media gateway controller sends a prompt signal to the called user terminal.

When the bandwidth is requested successfully, the MGC requires the MG at the called side to send a ring tone to the called user terminal, and the MGC requires the MG at the calling side to send a ring back tone to the calling user terminal according to an embodiment.

According to an embodiment, when the bandwidth is not requested successfully, the MG notifies the MGC, and the MGC requires the MG at the calling side to send a busy tone signal to the calling user terminal and notifies the MG at the calling side to release the resource.

The media gateway may be any one of Integrated Access Device (IAD), Access Gateway (AG), Access Media Gateway (AMG), set-top box, trunk gateway, Universal Media Gateway (UMG) and IP visual telephone, and is adapted to access data and voice and process media data flow.

The media gateway may be embedded in the subscriber station. According to another embodiment of the present invention, there is provided a WIMAX system, which includes at least two user terminals, a Media Gateway (MG), a Subscriber Station (SS), a Base Station (BS), a Broadband Access Server (BAS) and a Media Gateway Controller (MGC) connected to the broadband access server;
the MG is adapted to make awareness of a service which is requested by a calling user terminal, report to the media gateway controller that the calling user terminal is off hook, and notifies the SS to establish a corresponding connection with the BS; and
the media gateway controller (MGC) is adapted to request the calling media gateway (MG) to send a dial tone to the calling user terminal;
the SS is adapted to send a request of establishing the connection to the BS and request the BS for bandwidth, and to establish a service channel from the MG to the SS and then from the SS to the BS. To make awareness of a service comprises that the media gateway (MG) parses a message from the calling user terminal to determine the type of a service flow carried in the message.

Compared with the prior technology, in the method of the present invention, only if a service requirement occurs indeed, a service flow is activated and occupies air interface bandwidth (an air interface refers to an interface between a base station and a subscriber station). In case that the service flow is not activated, no interface bandwidth needs to be occupied or reserved. The MG makes awareness of the service, and then notifies the SS to establish a connection with the BS and to obtain bandwidth. Accordingly, the SS need not make awareness of the service, thus decreasing the complexity for realizing SS, reducing the cost, facilitating the interconnection between WIMAX devices. The SS and the MG are integrated into one device, thus avoiding the requirement of employing a private protocol between the SS and the MG, guaranteeing the interconnection between the SS and the MG, and reducing processing time.

By employing the method for realizing dynamic QoS provided by the embodiments of the present invention, there is no need to reserve bandwidth; the Service-Aware is performed by Media Gateway (MG); bandwidth is allocated by requesting on demand; thus improving the utilization of air interface bandwidth and improving the service processing efficiency.

### Brief Description of the Drawings

FIG.1 is a schematic diagram illustrating the dynamic QoS system architecture according to a first embodiment of the present invention;
FIG.2 is a flow diagram illustrating a successful request for resource according to the first embodiment of the present invention;
FIG.3 is a flow diagram illustrating a failed request for resource according to the first embodiment of the present invention;
FIG.4 is a flow diagram illustrating another successful request for resource according to the first embodiment of the present invention;
FIG.5 is a flow diagram illustrating another failed request for resource according to the first embodiment of the present invention;
FIG.6 is a flow diagram illustrating yet another successful request for resource according to the first embodiment of the present invention;
FIG.7 is a flow diagram illustrating a failed request of the called subscriber station for resource according to the first embodiment of the present invention;
FIG.8 is a network architecture diagram according to a second embodiment of the present invention;
FIG.9 is a flow diagram illustrating a successful request for resource according to the second embodiment of the present invention;
FIG.10 is a flow diagram illustrating a failed request for resource according to the second embodiment of the present invention.

### Detailed Description of the Embodiments

Embodiments of the present invention will be described in detail with reference to accompanying drawings.

The services with high QoS requirement include: VOIP, VOD and video conference etc.; hereunder the implement of the embodiments of the present invention is described by taking VOIP service as an example.

### Embodiment I:

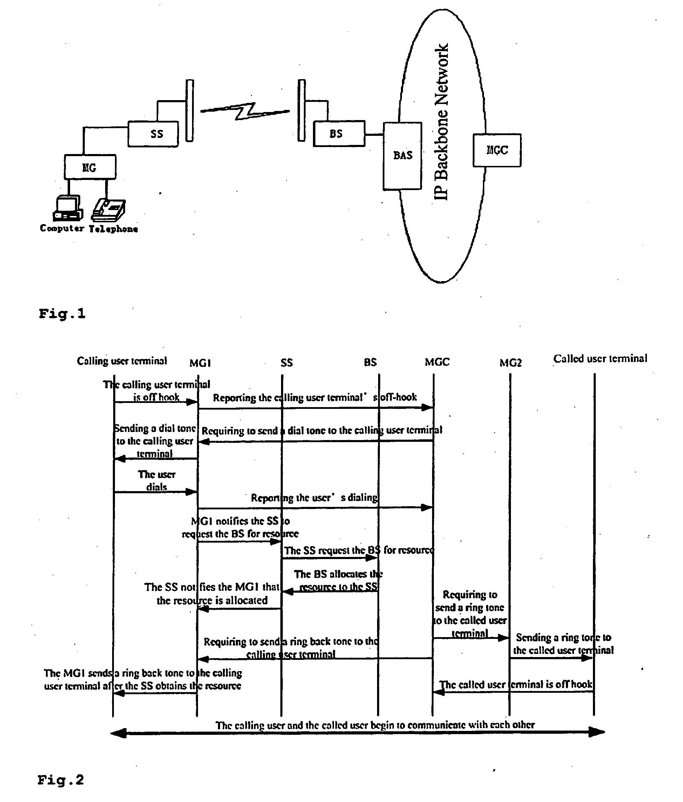

FIG.1 shows a system for realizing WIMAX dynamic QoS based on terminal-aware service, which includes a user terminal, a Media Gateway (MG), a subscriber station (SS), a base station (BS), a Broadband Access Server (BAS) and a Media Gateway Controller (MGC) connected to the broadband access server.

In this embodiment, the MG may be any one of an Integrated Access Device (IAD), an Access Gateway (AG), an Access Media Gateway (AMG), a Set Top Box (STB), a Trunk Media Gateway (TMG), a Universal Media Gateway (UMG) and an IP video telephone, for accessing data and voice and processing the media data flow.

The BAS is used for implementing management on the broadband access user terminal.

The MGC is used for controlling the MG to carry out call processing. A soft-switch device, SOFTSWITCH, is also a kind of MGC.

The procedures for dynamic QoS call in various cases are described hereunder respectively.

In one case, the calling user terminal is a wireless subscriber, and the called user terminal is a wired subscriber, as shown is FIG.2.

Firstly, the calling user terminal sends an off-hook signal to a calling media gateway MG1. After making awareness of the service, the calling media gateway MG1 reports to the MGC that the calling user terminal is off hook. Then, the MGC requests the calling media gateway MG1 to send a dial tone to the calling user terminal, and the calling media gateway MG1 sends the dial tone to the calling user terminal to notify the calling user terminal that it may start to dial.

Aware service refers to that a device can parse a message to determine the type of the service flow carried in the message. For this purpose, firstly the service flow is classified (for example, according to IP address or MAC address), and then the protocol type is analyzed. For example, Voice Over IP (VOIP) calls adopts H.248 protocol, which are distinguished by UDP port number, therefore it is needed for the device to be capable of analyzing the UDP port number of each message. Then, the calling user terminal begins to dial, and sends dialing information to the calling media gateway MG1. After receiving the dialing information, the calling media gateway MG1 reports the information to MGC, and notifies the SS to establish an RT-PS connection with the BS and to request the BS for bandwidth. After receiving the notification, the SS sends a Dynamic Service Addition (DSA) signal to the BS to request for a connection (the bandwidth may be allocated only after the connection is established). The BS performs a Connection Admission Control (CAC), and allocates the bandwidth resource or rejects the request. If the resource is obtained, the session between the MG and the MGC proceeds; otherwise the session terminates.

If the resource request is successful, that is, the BS allocates the bandwidth to the SS, the SS notifies the calling media gateway MG1 that the bandwidth is allocated. The MGC requests a called media gateway MG2 to send a ring tone to the called user terminal to notify the called user terminal that a connection is requested by a user terminal; and requests the calling media gateway MG1 to send a ring back tone to the calling user terminal. Then, the calling media gateway MG1 sends a ring back tone to the calling user terminal, and the called media gateway MG2 sends a ring tone to the called user terminal. At this point, if the called user terminal is off hook, the MGC will receive the off-hook information of the called user terminal, and then the calling user terminal and the called user terminal may begin to communicate with each other.

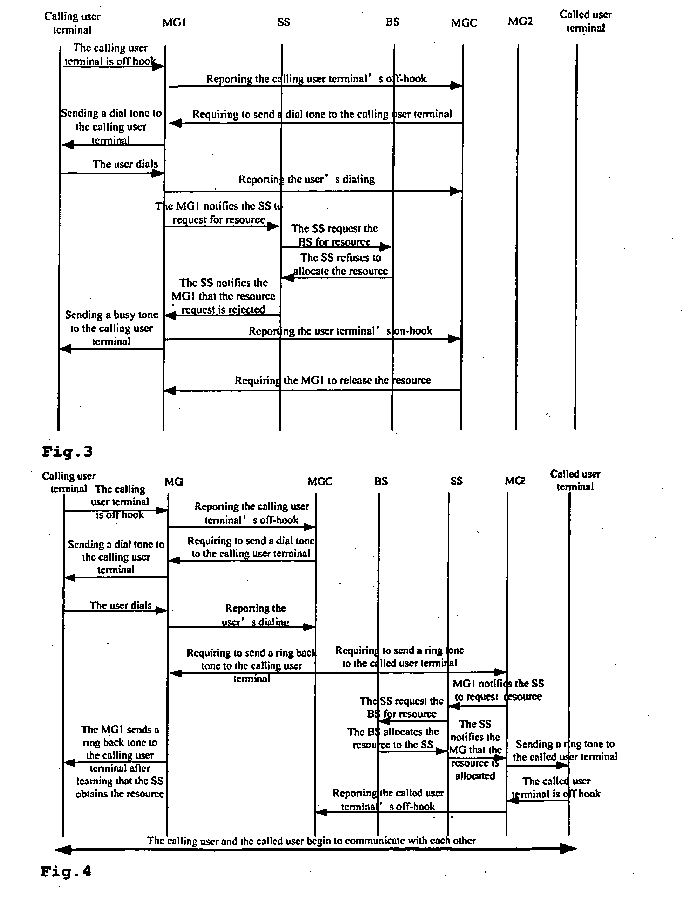

If the resource request is failed, that is, the BS rejects to allocate bandwidth to the SS, the SS notifies the calling media gateway MG1 that the request is rejected, as shown in FIG.3. The calling media gateway MG1 sends a busy tone to the calling user terminal, and reports the off-hook information to the MGC after the calling user terminal is off hook. At last the MGC requests the calling media gateway MG1 to release the resource. In this embodiment, the MG is embodied as an IAD, and the MGC is embodied as a soft-switch device SOFTSWITCH.

To be summarized, in the solution of the embodiments of the present invention, there is no need for the BS to reserve resources. Only after a call is initiated, the MG makes awareness of the service type and then notifies the SS to establish a connection with the BS to request the BS for bandwidth. If the request is successful, the service flow proceeds; otherwise the service flow terminates. That is, only if a service requirement occurs indeed, a service flow is activated and occupies air interface bandwidth. In the case that the service flow is not activated, no interface bandwidth is occupied. Therefore the utilization of air interface bandwidth is improved. Additionally, the MG makes awareness of the service type, and then notifies the SS to activate the service flow. The SS and the BS are both Layer 2 devices, which do not parse higher-layer protocols. Because the BS and the SS need not make awareness of services, the complexity and the cost for realizing the software are reduced, which also benefits the interconnection between WIMAX equipments of different vendors.

In another case, the calling user terminal is a wired subscriber, and the called user terminal is a wireless subscriber, as shown in FIG.4. The MG making awareness of the service is the called media gateway MG2.

Firstly, the calling user terminal sends an off-hook signal to the calling media gateway MG1, and the calling media gateway MG1 reports to the MGC that the calling user terminal is off hook. Then, the MGC requests the calling media gateway MG1 to send a dial tone to the calling user terminal, and the calling media gateway MG1 sends a dial tone to notify the calling user terminal that it may begin to dial.

Then, the calling user terminal begins to send dialing information to the calling media gateway MG1. After receiving the dialing information, the calling media gateway MG1 reports the dialing information of the calling user terminal to the MGC. And after receiving the dialing information of the calling user terminal, the MGC requests the calling media gateway MG2 to send a ring tone to the called user terminal. The called media gateway MG2 which makes awareness of the service immediately notifies the SS to establish an RT-PS connection with the BS and to request the BS for the bandwidth. After receiving the notification, the SS sends a DSA to request for establishing a connection. The BS performs a CAC, and allocates bandwidth resource or rejects the request. If the bandwidth resource is obtained, the session between the MG and the MGC proceeds; otherwise, the session terminates.

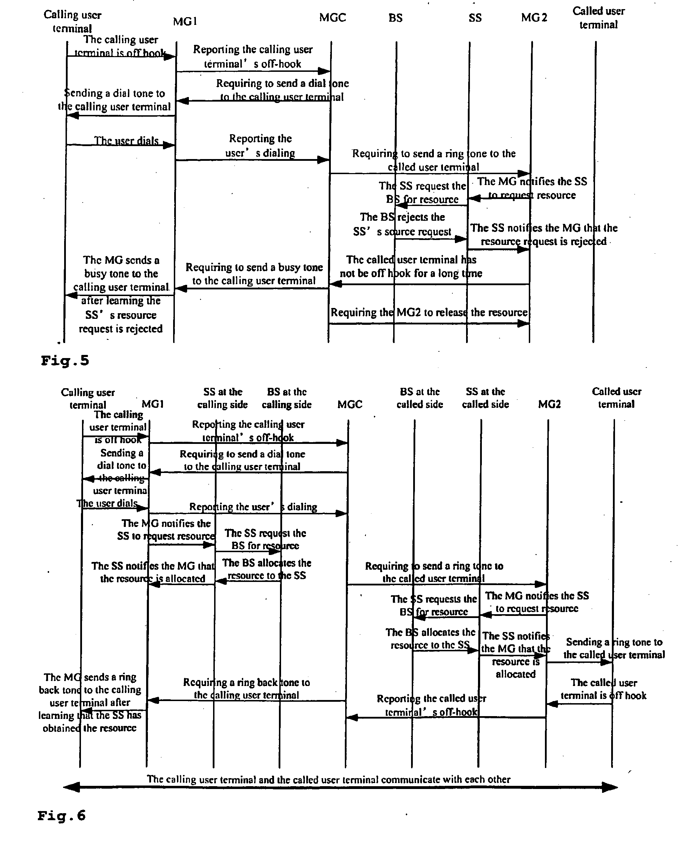

If the resource request is successful, that is, the BS allocates the bandwidth to the SS, the SS notifies the calling media gateway MG2 that the bandwidth is allocated. The called media gateway MG2 sends a ring tone to the called user terminal, and the MGC requests the calling media gateway MG1 to send a ring back tone to the calling user terminal. The calling media gateway MG1 sends the ring back tone to the calling user terminal. At this point, if the called user terminal is off hook, the off-hook information of the called user terminal is received by the MGC, and then the calling user terminal and the called user terminal may begin to communicate with each other. As shown in FIG.5, if the resource request is failed, that is, the BS rejects to allocate bandwidth to the SS, the SS notifies the called media gateway MG2 that the request is rejected. The called media gateway MG2 reports to the MGC that the called user terminal has not been off hook for a long time. The MGC requests the calling media gateway MG1 to send a busy tone signal to the calling user terminal, and requests the called media gateway MG2 to release the resource. The calling media gateway MG1 sends the busy tone signal to the calling user terminal.

In the present embodiment the MG is embodied as an IAD, and the MGC is embodied as a soft-switch device SOFTSWITCH.

In yet another case, both the calling user terminal and the called user terminal are wireless subscribers, and both the calling media gateway MG1 and the called media gateway MG2 need to make awareness of services. In this case, only after both the calling subscriber station and the called subscriber station request for resource successfully, the communication can begin; if either is failed, a service channel can not be established. The flow in the case that the calling user station is failed to request for bandwidth is the same as the flow of the failed bandwidth request in the first case of the embodiment as shown in FIG.3. Therefore, only the flow in the case that both the calling subscriber station and the called subscriber station request for resource successfully and the flow of failed request of the called subscriber station for resource are described hereunder.

The flow in the case that both the calling subscriber station and the called subscriber station request for resource successfully is as follows:

Firstly, the calling user terminal sends an off-hook signal to the calling media gateway MG1, and the calling media gateway MG1 reports to the MGC that the calling user terminal is off hook. Then, the MGC requests the calling media gateway MG1 to send a dial tone to the calling user terminal, and the calling media gateway MG1 sends a dial tone to the calling user terminal to notify the calling user terminal that the calling user terminal may begin to dial.

Then, the calling user terminal begins to send dialing information to the calling media gateway MG1. After receiving the dialing information, the calling media gateway MG1 reports the dialing information of the calling user terminal to the MGC, and notifies the SS at the calling side to establish an RT-PS connection with the BS at the calling side and to request the BS for bandwidth. After receiving the notification, the SS at the calling side sends a DSA to the BS at the calling side to request for a connection. The BS at the calling side performs a CAC, and allocates the resource or rejects the request.

As shown in FIG.6, if the request is successful, that is, the BS at the calling side allocates the bandwidth to the SS at the calling side, the SS at the calling side notifies the calling media gateway MG1 that the bandwidth has been allocated; and the MGC requests the called media gateway MG2 to send a ring tone to the called user terminal, and requests the calling media gateway MG1 to send a ring back tone to the calling user terminal.

Then, the called side begins to request for bandwidth: upon receiving the request for sending a ring tone to the called user terminal, the called media gateway MG2 immediately notifies the SS at the called side to establish an RT-PS connection with the BS at the called side and to request the BS at the called side for bandwidth. After receiving the notification, the SS at the called side sends a DSA to request the BS at the called side to establish a connection. The BS at the called side performs a CAC, and allocates the resource or rejects the request.

If the request is successful, that is, the BS at the called side allocates the bandwidth to the SS at the called side, the SS at the called side notifies the called media gateway MG2 that the bandwidth has been allocated. The called media gateway MG2 sends a ring tone to the called user terminal, and then the calling media gateway MG1 sends a ring back tone to the calling user terminal. At this point, if the called user terminal is off hook, the MGC will receive the off-hook information of the called user terminal, and then the calling user terminal and the called user terminal can begin to communicate with each other.

The flow in the case that the called subscriber station fails is as follows:

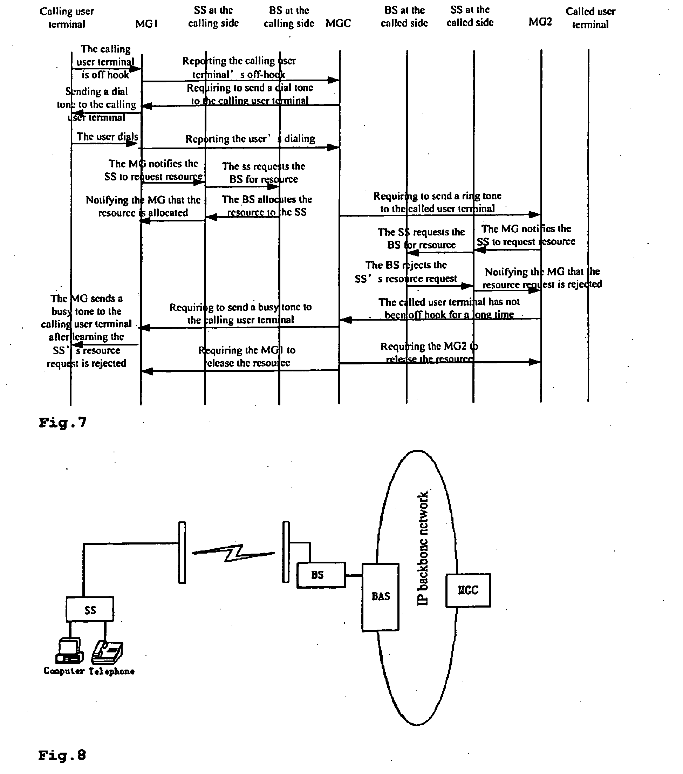

As shown in FIG.7, after the calling subscriber station requests for bandwidth successfully, the MGC requests the called media gateway MG2 to send a ring tone to the called user terminal, and requests the calling media gateway MG1 to send a ring back tone to the calling user terminal. Then the called side begins to request for bandwidth: upon receiving the request for sending a ring tone to the called user terminal, the called media gateway MG2 immediately notifies the SS at the called side to establish an RT-PS connection with the BS at the called side and to request the BS at the called side for bandwidth. After receiving the notification, the SS at the called side sends a DSA to the BS at the called side to request for a connection. The BS at the called side performs a CAC, and allocates the resource or rejects the request.

If the request is failed, that is, the BS at the called side rejects to allocate bandwidth to the SS at the called side, the SS at the called side notifies the called media gateway MG2 that the request is rejected. At this point, the called media gateway MG2 doesn't make any process, and waits for the MGC to time out. If the MGC times out before receiving the user's off-hook signal reported by the media gateway, it terminates the procedure of this session. The MGC requests the calling media gateway MG1 to send a busy tone signal to the calling user terminal, and requests the calling media gateway MG1 and the called media gateway MG2 to release the resource. The calling media gateway MG1 sends a busy tone signal to the calling user terminal.

In this case, the MGC is embodied as a soft-switch device SOFTSWITCH. The MG is embodied as an IAD. The calling user terminal and the called user terminal can use the same SS and BS, and also can use different SSs and BSs respectively. If different SSs and BSs are used, they may be differentiated as the SS at the calling side, the SS at the called side, the BS at the calling side and the BS at the called side; otherwise, the same SS and BS are used.

### Embodiment II:

As shown in FIG.8, FIG.9 and FIG.10, the second embodiment is different from Embodiment I in that: the MG is built in the SS, and the WIMAX SS itself is an MG, which has all the functions of the MG described in Embodiment I.

Similar to Embodiment I, the second embodiment also has three cases. Because the second embodiment is different from Embodiment I only in that the MG is built in the SS, only the case as bellow is described: the calling user terminal is a wireless subscriber, and the called user terminal is a wired subscriber; the MG which is aware of services is built in the SS at the calling side.

The procedure of a dynamic QoS call is described as follows. Firstly, the calling user terminal sends an off-hook signal to the SS, and the SS reports to the MGC that the calling user terminal is off hook. The MGC requests the SS to send a dial tone to the calling user terminal. The SS sends a dial tone to the calling user terminal to notify the calling user terminal that the calling user terminal may begin to dial.

Then, the calling user terminal begins to send dialing information to the SS. After receiving the dialing information, the SS reports the dialing information of the calling user terminal to the MGC, and sends a DSA to request the BS to establish a connection. The BS performs a CAC, and allocates the resource or rejects the request.

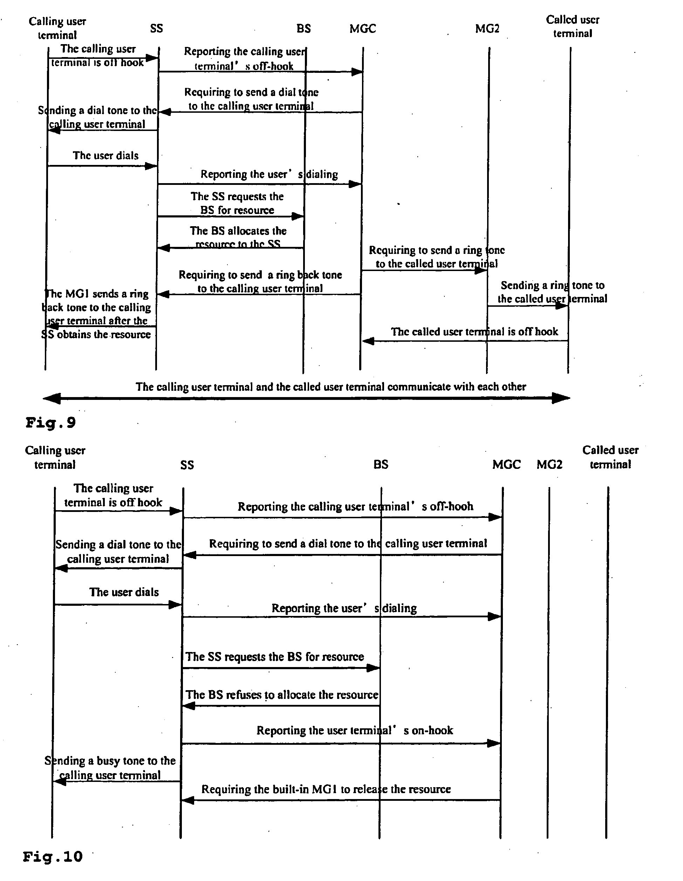

As shown in FIG.9, if the request is successful, that is, the BS allocates bandwidth to the SS, the MGC requests the called media gateway MG2 to send a ring tone to the called user terminal, and requests the SS to send a ring back tone to the calling user terminal. Then the called media gateway MG2 sends a ring tone to the called user terminal, and the SS sends a ring back tone to the calling user terminal. Then if the called user terminal is off hook, the MGC receives the off-hook information of the called user terminal, and then the calling user terminal and the called user terminal can begin to communicate with each other.

As shown in FIG.10, the request is failed, that is, the BS rejects to allocate bandwidth to the SS. The SS sends a busy tone signal to the calling user terminal, and reports an on-hook information to the MGC after the calling user terminal is on hook. The MGC requests the SS to release the resource.

In the second embodiment, the MGC is embodied as a soft-switch device SOFTSWITCH. The MG is embodied as an IAD built in the SS.

In summary, the SS and the MG are integrated into one device in the second embodiment, thus avoiding employing a private protocol between the SS and the MG, guaranteeing the interconnection between the SS and the MG, and reducing processing time. For example, the IAD needs to notify the SS to request for resource, and the SS needs to notify the IAD that the resource has been allocated or the request for resource is rejected; therefore the time to establish the call is reduced.

Though the present invention is described above in preferred embodiments, it is noted that those skilled in the art may make modifications and variations, without departing from the basic principle of the present invention; any of those modifications and variations shall fall into the protected scope of the present invention defined by the following claims.

## Claims

1. A method for realizing dynamic QoS in WIMAX system, wherein the method comprises:
a media gateway (MG) making awareness of a service which is requested by a calling user terminal;
reporting to a media gateway controller (MGC) connected to a broadband access server (BAS) that the calling user terminal is off hook;
requesting, by the media gateway controller (MGC), to send a dial tone to the calling user terminal;
notifying, by the media gateway (MG), a subscriber station (SS) to establish a corresponding connection with a base station (BS);
sending, by the subscriber station (SS), a request of establishing the connection to the base station (BS) and requesting the base station (BS) for bandwidth, and establishing a service channel from the media gateway (MG) to the subscriber station and then from the subscriber station (SS) to the base station (BS);
wherein the making awareness of the service comprises that the media gateway (MG) parses a message from the calling user terminal to determine the type of a service flow carried in the message.

2. The method according to claim 1, further comprising:
the calling user terminal sending the service request to the media gateway (MG); and
the media gateway (MG) responding the request of the calling user terminal, and reporting the request of the calling user terminal to the media gateway controller (MGC).

3. The method according to claim 1 or 2, wherein
after receiving the notification from the media gateway (MG), the subscriber station (SS) sends a dynamic service addition to the base station (BS) to request for the connection, and the base station (BS) allocates the resource by a connection admission control or rejects the request.

4. The method according to claim 3, further comprising:
when the bandwidth is requested successfully, the media gateway controller (MGC) notifying the media gateway (MG) to send a prompt signal to a called user terminal, and notifying the media gateway (MG) to send a prompt signal to the calling user terminal.

5. The method according to claim 3, further comprising:
when the bandwidth is not requested successfully, the media gateway (MG) sending a busy signal to the calling user terminal, and the media gateway controller (MGC) notifying a related media gateway (MG1) to release the resource.

6. The method according to claim 2, further comprising: the media gateway controller (MGC) sending a prompt signal to the called user terminal.

7. The method according to claim 6, further comprising:
when the bandwidth is requested successfully, the media gateway controller (MGC) requiring the media gateway (MG) at the called side to send a ring tone to the called user terminal, and the media gateway controller (MGC) requiring the media gateway (MG) at the calling side to send a ring back tone to the calling user terminal.

8. The method according to claim 6, further comprising:
when the bandwidth is not requested successfully, the media gateway (MG) notifying the media gateway controller (MGC), and the media gateway controller (MGC) requiring the media gateway (MG) at the calling side to send a busy tone signal to the calling user terminal and notifying the media gateway (MG) at the calling side to release the resource.

9. The method according to claim 1 or 2, wherein the media gateway (MG) is any one of integrated access device, access gateway, access media gateway, set-top box, trunk gateway, universal media gateway and IP visual telephone, and is adapted to access data and voice and process media data flow.

10. The method according to claim 1 or 2, wherein the media gateway (MG) is embedded in the subscriber station (SS).

11. A WIMAX system, comprising at least two user terminals, a media gateway (MG), a subscriber station (SS), a base station (BS), a broadband access server (BAS) and a media gateway controller (MGC) connected to the broadband access server (BAS), wherein
the media gateway (MG) is adapted to make awareness of a service which is requested by a calling user terminal, report to the media gateway controller (MGC) that the calling user terminal is off hook, and notifies the subscriber station (SS) to establish a corresponding connection with the base station (BS);
the media gateway controller (MGC) is adapted to request the calling media gateway (MG) to send a dial tone to the calling user terminal; and
the subscriber station (SS) is adapted to send a request of establishing the connection to the base station (BS) and request the base station (BS) for bandwidth, and to establish a service channel from the media gateway (MG) to the subscriber station (SS) and then from the subscriber station (SS) to the base station (BS);
wherein to make awareness of a service comprises that the media gateway (MG) parses a message from the calling user terminal to determine the type of a service flow carried in the message.

12. The system according to claim 11, wherein
the calling user terminal sends the service request to the media gateway (MG); and
the media gateway (MG) responds the request of the calling user terminal, and reports the request of the calling user terminal to the media gateway controller (MGC).

13. The system according to claim 11, wherein
after receiving the notification from the media gateway (MG), the subscriber station (SS) sends a dynamic service addition to the base station (BS) to request for the connection, and the base station (BS) allocates the resource by a connection admission control or rejects the request.

14. The system according to claim 13, wherein
when the bandwidth is requested successfully, the media gateway controller (MGC) notifies the media gateway (MG) to send a prompt signal to a called user terminal, and notifies the media gateway (MG) to send a prompt signal to the calling user terminal; and
when the bandwidth is not requested successfully, the media gateway (MG) sends a busy signal to the calling user terminal, and the media gateway controller (MGC) notifies a related media gateway (MG1) to release the resource.

15. The system according to claim 11, wherein the media gateway (MG) is embedded in the subscriber station (SS).

## Patentansprüche

1. Verfahren zur Realisierung einer dynamischen QoS in einem WIMAX-System, wobei das Verfahren folgendes umfasst:
Ein Media-Gateway (MG) macht auf einen Dienst aufmerksam, der von einem anrufenden Benutzer-Endgerät angefordert wird;
Berichten an eine Media-Gateway-Steuerung (MGC), die mit einem Breitband-Zugangs-Server (BAS) verbunden ist, dass das anrufende Benutzer-Endgerät abgehoben hat;
Anfordern durch die Media-Gateway-Steuerung (MGC), einen Wählton an das anrufende Benutzer-Endgerät zu senden;
durch das Media-Gateway (MG) Benachrichtigen einer Teilnehmerstation (SS), eine entsprechende Verbindung mit der Basisstation (BS) aufzubauen;
durch die Teilnehmerstation (SS) Senden einer Anforderung zum Aufbau der Verbindung zur Basisstation (BS) und Anfordern von Bandbreite bei der Basisstation (BS), und Aufbau eines Dienstkanals vom Media-Gateway (MG) zur Teilnehmerstation und dann von der Teilnehmerstation (SS) zur Basisstation (BS);
wobei das auf den Dienst aufmerksam machen es umfasst, dass das Media-Gateway (MG) eine Nachricht vom anrufenden Teilnehmer-Endgerät analysiert, um den Typ eines Dienstflusses festzustellen, der in der Nachricht übertragen wird.

2. Verfahren gemäß Anspruch 1, ferner umfassend:
Senden der Dienstanforderung durch das anrufende Benutzer-Endgerät zum Media-Gateway (MG); und
Antworten des Media-Gateways (MG) auf die Anforderung des anrufenden Benutzer-Endgerätes, und Melden der Anforderung des anrufenden Benutzer-Endgerätes an die Media-Gateway-Steuerung (MGC).

3. Verfahren gemäß Anspruch 1 oder 2, wobei
nach Empfangen der Benachrichtigung vom Media-Gateway (MG) die Teilnehmerstation (SS) eine dynamische Dienst-Hinzufügung zur Basisstation (BS) sendet, um die Verbindung anzufordern, und die Basisstation (BS) die Ressource durch eine Verbindungs-Erlaubnis-Steuerung zuordnet oder die Anforderung ablehnt.

4. Verfahren gemäß Anspruch 3, ferner umfassend:
Wenn die Bandbreite erfolgreich angefordert wurde, benachrichtigt die Media-Gateway-Steuerung (MGC) das Media-Gateway (MG), ein Aufforderungssignal an ein angerufenes Benutzer-Endgerät zu senden, und benachrichtigt das Media-Gateway (MG), ein Aufforderungssignal an das anrufende Benutzer-Endgerät zu senden.

5. Verfahren gemäß Anspruch 3, ferner umfassend:
Wenn die Bandbreite nicht erfolgreich angefordert wurde, sendet das Media-Gateway (MG) ein Besetzt-Signal an das anrufende Benutzer-Endgerät, und die Media-Gateway-Steuerung (MGC) benachrichtigt ein zugehöriges Media-Gateway (MG1), die Ressource freizugeben.

6. Verfahren gemäß Anspruch 2, ferner umfassend: Die Media-Gateway-Steuerung (MGC) sendet ein Aufforderungssignal an das angerufene Benutzer-Endgerät.

7. Verfahren gemäß Anspruch 6, ferner umfassend:
Wenn die Bandbreite erfolgreich angefordert wurde, fordert die Media-Gateway-Steuerung (MGC) das Media-Gateway (MG) auf der angerufenen Seite auf, ein Klingelzeichen zum angerufenen Benutzer-Endgerät zu senden, und die Media-Gateway-Steuerung (MGC) fordert das Media-Gateway (MG) auf der anrufenden Seite auf, einen Rufton an das anrufende Benutzer-Endgerät zu senden.

8. Verfahren gemäß Anspruch 6, ferner umfassend:
Wenn die Bandbreite nicht erfolgreich angefordert wurde, benachrichtigt das Media-Gateway (MG) die Media-Gateway-Steuerung (MGC), und die Media-Gateway-Steuerung (MGC) fordert das Media-Gateway (MG) auf der anrufenden Seite auf, ein Besetzttonsignal an das anrufende Benutzer-Endgerät zu senden und benachrichtigt das Media-Gateway (MG) auf der anrufenden Seite, die Ressource freizugeben.

9. Verfahren gemäß Anspruch 1 oder 2, wobei das Media-Gateway (MG) ein beliebiges aus integrierter Zugangs-Einrichtung, Zugangs-Gateway, Zugangs-Media-Gateway, Set-Top-Box, Trunk-Gateway, Universal-Media-Gateway und IP-Bildtelefon ist und dazu eingerichtet ist, auf Daten und Sprache zuzugreifen und einen Medien-Datenfluss zu verarbeiten.

10. Verfahren gemäß Anspruch 1 oder 2, wobei das Media-Gateway in die Teilnehmerstation (SS) eingebettet ist.

11. WIMAX-System, umfassend mindestens zwei Benutzer-Endgeräte, ein Media-Gateway (MG), eine Teilnehmerstation (SS), eine Basisstation (BS), einen Breitband-Zugangs-Server (BAS) und eine Media-Gateway-Steuerung (MGC), die mit dem Breitband-Zugangs-Server (BAS) verbunden ist, wobei
das Media-Gateway (MG) dazu eingerichtet ist, auf einen Dienst aufmerksam zu machen, der von einem anrufenden Benutzer-Endgerät angefordert wird, an die Media-Gateway-Steuerung (MGC) zu berichten, dass das anrufende Benutzer-Endgerät abgehoben hat, und die Teilnehmerstation (SS) benachrichtigt, eine entsprechende Verbindung mit der Basisstation (BS) aufzubauen;
die Media-Gateway-Steuerung (MGC) dazu eingerichtet ist, das anrufende Media-Gateway (MG) aufzufordern, einen Wählton an das anrufende Benutzer-Endgerät zu senden; und
die Teilnehmerstation (SS) dazu eingerichtet ist, eine Anforderung zum Aufbau der Verbindung zur Basisstation (BS) zu senden und bei der Basisstation (BS) Bandbreite anzufordern, und einen Dienstkanal vom Media-Gateway (MG) zur Teilnehmerstation (SS) und dann von der Teilnehmerstation (SS) zur Basisstation (BS) aufzubauen;
wobei das auf den Dienst aufmerksam machen es umfasst, dass das Media-Gateway (MG) eine Nachricht vom anrufenden Teilnehmer-Endgerät analysiert, um den Typ eines Dienstflusses festzustellen, der in der Nachricht übertragen wird.

12. System gemäß Anspruch 11, wobei
das anrufende Benutzer-Endgerät die Dienstanforderung zum Media-Gateway (MG) sendet; und
das Media-Gateway (MG) auf die Anforderung des anrufenden Benutzer-Endgerätes antwortet und die Anforderung des anrufenden Benutzer-Endgerätes an die Media-Gateway-Steuerung (MGC) meldet.

13. System gemäß Anspruch 11, wobei
nach Empfangen der Benachrichtigung vom Media-Gateway (MG) die Teilnehmerstation (SS) eine dynamische Dienst-Hinzufügung zur Basisstation (BS) sendet, um die Verbindung anzufordern, und die Basisstation (BS) die Ressource durch eine Verbindungs-Erlaubnis-Steuerung zuordnet oder die Anforderung ablehnt.

14. System gemäß Anspruch 13, wobei
wenn die Bandbreite erfolgreich angefordert wurde, die Media-Gateway-Steuerung (MGC) das Media-Gateway (MG) benachrichtigt, ein Aufforderungssignal an ein angerufenes Benutzer-Endgerät zu senden, und das Media-Gateway (MG) benachrichtigt, ein Aufforderungssignal an das anrufende Benutzer-Endgerät zu senden; und
wenn die Bandbreite nicht erfolgreich angefordert wurde, das Media-Gateway (MG) ein Besetzt-Signal an das anrufende Benutzer-Endgerät sendet, und die Media-Gateway-Steuerung (MGC) ein zugehöriges Media-Gateway (MG1) benachrichtigt, die Ressource freizugeben.

15. System gemäß Anspruch 11, wobei das Media-Gateway (MG) in die Teilnehmerstation (SS) eingebettet ist.

## Revendications

1. Méthode pour réaliser une qualité de service dynamique dans un système WIMAX, sachant que la méthode comprend :
une passerelle de média (MG) donnant connaissance d'un service requis par un terminal d'utilisateur appelant ;
faire rapport à un contrôleur de passerelle de média (MGC) connecté à un serveur d'accès à large bande (BAS) que le terminal d'utilisateur appelant est décroché ;
la requête, par le contrôleur de passerelle de média (MGC), d'envoyer une tonalité d'invitation à numéroter au terminal d'utilisateur appelant ;
la notification, par la passerelle de média (MG), d'un poste téléphonique d'abonné (SS) pour établir une connexion afférente avec une station de base (BS) ;
l'envoi, par le poste téléphonique d'abonné (SS), d'une requête d'établissement de la connexion avec la station de base (BS) et la demande de la largeur de bande à la station de base (BS), et l'établissement d'une voie de service depuis la passerelle de média (MG) au poste téléphonique d'abonné et ensuite depuis le poste téléphonique d'abonné (SS) à la station de base (BS) ;
dans laquelle la notification du service comprend que la passerelle de média (MG) analyse un message provenant du terminal d'utilisateur appelant pour déterminer le type d'un flux de service transporté par le message.

2. Méthode selon la revendication 1, comprenant en outre :
le terminal d'utilisateur appelant envoie la demande de service à la passerelle de média (MG) et
la passerelle de média (MG) répond à la requête du terminal d'utilisateur appelant, et fait rapport de la requête du terminal d'utilisateur appelant au contrôleur de passerelle de média (MGC).

3. Méthode selon l'une quelconque des revendications 1 ou 2,
dans laquelle :
après avoir reçu la notification depuis la passerelle de média (MG), le poste téléphonique d'abonné envoie un ajout de service dynamique à la station de base (BS) pour requérir la connexion, et la station de base (BS) alloue la ressource par un contrôle d'admission de connexion ou rejette la demande.

4. Méthode selon la revendication 3, comprenant en outre :
Lorsque la largeur de bande est demandée avec succès, le contrôleur de passerelle de média (MGC) notifie la passerelle de média (MG) d'envoyer un signal d'invite à un terminal d'utilisateur appelé et notifie la passerelle de média (MG) d'envoyer un signal d'invite au terminal d'utilisateur appelant.

5. Méthode selon la revendication 3, comprenant en outre :
Lorsque la largeur de bande n'est pas demandée avec succès, la passerelle de média (MG) envoie un signal d'occupation au terminal d'utilisateur appelant et le contrôleur de passerelle de média (MGC) notifie une passerelle de média associée (MG1) de libérer la ressource.

6. Méthode selon la revendication 2, comprenant en outre :
le contrôleur de passerelle de média (MGC) envoie un signal d'invite au terminal d'utilisateur appelé.

7. Méthode selon la revendication 6, comprenant en outre :
lorsque la largeur de bande est demandée avec succès, le contrôleur de passerelle de média (MGC) demande à la passerelle de média (MG) sur le côté appelé d'envoyer une tonalité d'appel au terminal d'utilisateur appelé, et le contrôleur de passerelle de média (MGC) demande à la passerelle de média (MG) sur le côté appelant d'envoyer une tonalité de retour d'appel au terminal d'utilisateur appelant.

8. Méthode selon la revendication 6, comprenant en outre :
lorsque la largeur de bande n'est pas demandée avec succès, la passerelle de média (MG) notifie le contrôleur de passerelle de média (MGC), et le contrôleur de passerelle de média (MGC) demande à la passerelle de média (MG) sur le côté appelant d'envoyer un signal de tonalité d'occupation au terminal d'utilisateur appelant et notifie la passerelle de média (MG) sur le côté appelant de libérer la ressource.

9. Méthode selon l'une quelconque des revendications 1 ou 2, dans laquelle la passerelle de média (MG) est une quelconque des possibilités suivantes un équipement d'accès intégré, une passerelle d'accès, une passerelle de média d'accès, un boîtier décodeur, une passerelle principale de réseau, une passerelle de média universelle ou un visiophone IP, et elle est adaptée pour accéder à des données et à la voix et traiter des flux de données média.

10. Méthode selon l'une quelconque des revendications 1 ou 2, dans laquelle la passerelle de média (MG) est incorporée dans le poste téléphonique d'abonné (SS).

11. Système WIMAX, comprenant au moins deux terminaux d'utilisateurs, une passerelle de média (MG), un poste téléphonique d'abonné (SS), une station de base (SS), un serveur d'accès à large bande (BAS) et un contrôleur de passerelle de média (MGC) connecté au serveur d'accès à large bande (BAS),
dans lequel la passerelle de média (MG) est adaptée pour donner connaissance d'un service demandé par un terminal d'utilisateur appelant, faire rapport au contrôleur de passerelle de média (MGC) que le terminal d'utilisateur appelant est décroché et notifier le poste téléphonique d'abonné (SS) pour établir une connexion afférente avec la station de base (BS);
le contrôleur de passerelle de média (MGC) est adapté pour demander à la passerelle de média appelante (MG) d'envoyer une tonalité d'invitation à numéroter au terminal d'utilisateur appelant;
le poste téléphonique d'abonné (SS) est adapté pour envoyer une requête d'établissement de la connexion avec la station de base (BS) et demander la largeur de bande à la station de base (BS), et pour établir une voie de service depuis la passerelle de média (MG) au poste téléphonique d'abonné (SS) et, ensuite, depuis le poste téléphonique d'abonné (SS) à la station de base (BS);
dans laquelle la notification d'un service comprend que la passerelle de média (MG) analyse un message provenant du terminal d'utilisateur appelant pour déterminer le type d'un flux de service transporté par le message.

12. Système selon la revendication 11, dans lequel le terminal d'utilisateur appelant envoie la demande de service à la passerelle de média (MG); et
la passerelle de média (MG) répond à la requête du terminal d'utilisateur appelant, et fait rapport de la requête du terminal d'utilisateur appelant au contrôleur de passerelle de média (MGC).

13. Système selon la revendication 11, dans lequel, après avoir reçu la notification depuis la passerelle de média (MG), le poste téléphonique d'abonné (SS) envoie un ajout de service dynamique à la station de base (BS) pour requérir la connexion, et la station de base (BS) alloue la ressource par un contrôle d'admission de connexion ou rejette la demande.

14. Système selon la revendication 13, dans lequel :
lorsque la largeur de bande est demandée avec succès, le contrôleur de passerelle de média (MGC) notifie la passerelle de média (MG) d'envoyer un signal d'invite à un terminal d'utilisateur appelé et notifie la passerelle de média (MG) d'envoyer un signal d'invite au terminal d'utilisateur appelant ; et
lorsque la largeur de bande n'est pas demandée avec succès, la passerelle de média (MG) envoie un signal d'occupation au terminal d'utilisateur appelant et le contrôleur de passerelle de média (MGC) notifie une passerelle de média associée (MG1) de libérer la ressource.

15. Système selon la revendication 11, dans laquelle la passerelle de média (MG) est incorporée dans le poste téléphonique d'abonné (SS).
